# EUROPEAN PATENT SPECIFICATION

(11) **EP 3 296 535 B1**
(45) Date of publication and mention of the grant of the patent: **12.02.2020**
(21) Application number: 16188761.7
(22) Date of filing: 14.09.2016
(51) Int. Cl.: F02B 29/04, F28F 9/02, F28F 9/00, F28D 21/00

(54) **COOLING DEVICE, IN PARTICULAR FOR A MOTOR VEHICLE**
KÜHLEINRICHTUNG, INSBESONDERE FÜR EIN KRAFTFAHRZEUG
DISPOSITIF DE REFROIDISSEMENT, NOTAMMENT POUR UN VÉHICULE AUTOMOBILE

(43) Date of publication of application: 21.03.2018
(73) Proprietor: Mahle International GmbH, 70376 Stuttgart (DE)
(72) Inventor: EHRMANNTRAUT, Johann, 73547 Lorch (DE); FERRAND, Nicolas, 70191 Stuttgart (DE); HELMS, Werner, 73730 Esslingen (DE); NGUYEN, Chi-Duc, 70469 Stuttgart (DE); PAWAR, Mithun, 411018 Maharashtra (IN); RICHTER, Jens, 70469 Stuttgart (DE); ZSIGA, Gerhard, 70469 Stuttgart (DE)
(74) Representative: BRP Renaud & Partner mbB Rechtsanwälte Patentanwälte Steuerberater

(56) References cited:
- EP-A2- 2 302 183
- WO-A2-2008/125309
- DE-A1- 19 857 435
- DE-U1- 20 016 331
- JP-A- S59 191 896

## Description

The present invention relates to a cooling device, in particular for a motor vehicle, and to an internal combustion engine having a cooling device of this type.

Cooling devices having heat exchangers are used in motor vehicles, for example as intercoolers when the charge air which is to be introduced into the cylinders of the internal combustion engine is to be cooled. The said heat exchanger typically comprises a plurality of gas paths for being flowed through with the gas to be cooled and, in a manner which is separated fluidically therefrom, a plurality of gas paths for being flowed through with a coolant. The gas is cooled by way of heat transfer from the hot gas to the colder coolant. In order to make the efficiency of the heat exchange as efficient as possible, the individual gas and coolant paths are as a rule arranged next to one another in an alternating manner. In this way, the surface area which is available for the thermal interaction is maximized. In order to distribute the gas to the individual gas paths after the introduction to the cooling device and to collect it after flowing through the individual gas paths, a gas distributor and a gas collector are typically attached to the heat exchanger, which communicate fluidically with the individual gas paths. It is typically necessary to attach suitable seal elements between the gas distributor and the heat exchanger and between the gas collector and the heat exchanger, in order to seal the gas paths of the heat exchanger fluidically against the outer surroundings of the heat exchanger.

The construction of the said components of the cooling device, that is to say of the heat exchanger, the gas distributor and the gas collector including the said seal elements, therefore as a rule proves to be very complex.

EP 2 302 183 A2 discloses a heat exchanger having a heat exchanger, which is arranged in a housing and has a plurality of gas paths which extend along a first direction for being flowed through with a gas to be cooled and a plurality of coolant paths which extend along a second direction for being flowed through with a coolant. The heat exchanger further comprises a gas distributor and a gas collector which communicate fluidically with the gas paths of the heat exchanger in order to distribute and collect, respectively, the gas to be cooled, are attached on two sides of the heat exchanger which lie opposite one another along the first direction. A first seal device is arranged between the housing and the gas distributor, and a second seal device is arranged between the housing and the gas collector, The first and the second seal device are configured as identical parts, wherein the first and the second seal device are formed in each case as a frame part with an inner frame and with an outer frame which encloses the inner frame on the outside at a spacing.

Therefore, the present invention is concerned with the problem of specifying an improved or at least alternative embodiment for a cooling device of the generic type, which embodiment is distinguished, in particular, by a simplified construction.

This object is achieved by way of the subject matter of the independent patent claims. Preferred embodiments are the subject matter of the dependent patent claims.

Accordingly, it is a basic concept of the invention to configure two central seal devices of the heat exchanger as identical parts. One of the two seal devices is arranged between the heat exchanger and a gas distributor for distributing the gas to be cooled to the individual gas paths of the heat exchanger. In this way, the gas paths and the interior space which is delimited by the gas distributor and communicates fluidically with the gas paths are sealed against the outer surroundings. The other of the two seal devices is arranged between the heat exchanger and a gas collector for collecting the gas to be cooled after flowing through the individual gas paths of the heat exchanger. In this way, the gas paths and the interior space which is delimited by the gas collector and communicates fluidically with the gas paths are sealed against the outer surroundings. The configuration of the two seal devices as identical parts simplifies their production and their assembly in the cooling device to a not inconsiderable extent. Since the gas collector, the gas distributor and the heat exchanger also have to be of correspondingly symmetrical construction in the case of a configuration of the two seal devices as identical parts, a simplified construction of the heat exchanger is also required. As a result, the said measures lead to reduced manufacturing costs for the entire cooling device.

A cooling device according to the invention for an internal combustion engine comprises a heat exchanger which is arranged in a housing and has a plurality of gas paths which extend along a first direction and a plurality of coolant paths which extend along a second direction. The heat exchanger can preferably be configured as a tube-fin heat exchanger or as a stacked plate heat exchanger. A gas distributor and a gas collector are attached on two sides which lie opposite one another along the first direction and on which the housing is of open configuration. The said gas distributor and gas collector communicate fluidically with the gas paths of the heat exchanger in order to distribute and collect, respectively, the gas to be cooled. A first seal device is arranged between the housing and the gas distributor. A second seal device is arranged between the housing and the gas collector. According to the invention, the first and the second seal device are configured as identical parts. The first and second seal device are configured in each case as a frame part with an inner frame and with an outer frame. The outer frame is arranged at a spacing from the inner frame and encloses the inner frame on the outside. The inner frame is connected to the outer frame by means of at least one connecting strut.

At least the outer frame is preferably configured as a sealing lip made from an elastic material. A particularly satisfactory sealing action can be achieved by means of a sealing lip of this type.

The inner frame can particularly preferably also be configured from the elastic material and can be formed integrally on the outer frame. This variant is particularly simple to realise and therefore inexpensive.

In a further preferred embodiment, the outer frame of the first seal device is arranged sealingly between a side of the housing which faces the gas distributor and the gas distributor. The inner frame of the first seal device is arranged between that side of the heat exchanger which faces the gas distributor and the gas distributor. As an alternative or in addition in this embodiment, the outer frame of the second seal device is arranged sealingly between a side of the housing which faces the gas collector and the gas collector. The inner frame of the second seal device is arranged between that side of the heat exchanger which faces the gas collector and the gas collector. Both measures, per se or in combination, ensure a very satisfactory sealing action which is generated by the frame part. At the same time, stable mechanical fastening of the frame part to the heat exchanger and to the gas distributor and gas collector is ensured.

In one advantageous development, the gas distributor is configured as a casing hood which is enclosed by an edge section of plate-like configuration. A through opening can be provided in the casing hood, through which through opening the gas to be distributed to the heat exchanger can be introduced into the gas distributor. A completely circumferential receiving groove is configured on a side of the edge section which faces the heat exchanger, in which receiving groove the outer frame of the first seal device is received partially. As an alternative or in addition, the gas collector is configured as a casing hood which is enclosed by an edge section of plate-like configuration. A through opening can be provided in the casing hood, through which through opening the gas which is collected from the heat exchanger can be discharged from the gas collector. A completely circumferential receiving groove is configured on a side of the edge section which faces the heat exchanger, in which receiving groove the outer frame of the second seal device is received partially. The configuration of the gas distributor and/or gas collector as a casing hood requires a particularly small amount of installation space, with the result that the cooling device can be of very compact overall design. The provision of a receiving groove in the said casing hood makes stable fixing of the respective seal element on the casing hood possible. At the same time, the desired sealing action is ensured.

In a further preferred embodiment, a completely circumferential receiving groove is configured on that first side of the housing which faces the gas distributor. The outer frame of the first seal device is received partially in the said receiving groove. As an alternative or in addition, a completely circumferential receiving groove is configured on that second side of the housing which faces the gas collector. The outer frame of the second seal device is received partially in the said receiving groove. The provision of a receiving groove on the heat exchanger makes stable fixing of the respective seal element on the heat exchanger possible. At the same time, the desired sealing action is ensured.

In a further preferred embodiment, the inner frame of the first seal device is clamped between the heat exchanger and the edge section of the gas distributor. As an alternative or in addition, the inner frame of the second seal device is clamped between the heat exchanger and the edge section of the gas collector. In this way, the seal element which is configured as a frame part is fixed on the heat exchanger in a stable manner.

A further advantageous development is associated with particularly low manufacturing costs, in which development the at least one connecting strut is manufactured from the elastic material of the outer frame and is formed integrally on the outer frame.

The inner frame particularly expediently has the geometry of a rectangle with two longitudinal sides and with two transverse sides.

In one advantageous development, four connecting struts are provided. In this variant, two first connecting struts are arranged at a spacing from one another on a first transverse side of the rectangle. The two first connecting struts project outwards towards the outer frame from the said transverse side. Moreover, two second connecting struts are arranged at a spacing from one another on a second transverse side of the rectangle and project outwards towards the outer frame from the said transverse side.

Furthermore, the invention relates to an internal combustion engine according to claim 11.

Preferred exemplary embodiments of the invention are shown in the drawings and will be explained in greater detail in the following description.

In the drawings, in each case diagrammatically:
- Fig. 1: shows one example of a cooling device according to the invention in an exploded illustration,
- Fig. 2: shows a seal element of the cooling device in a perspective illustration,
- Fig. 3: shows a detailed illustration of the seal element from Figure 2,
- Fig. 4: shows the seal element from Figure 3 in a longitudinal section along the sectional line III-III from Figure 3, and
- Fig. 5: shows the arrangement of the seal element between the heat ex-changer and the gas distributor in a sectional illustration.

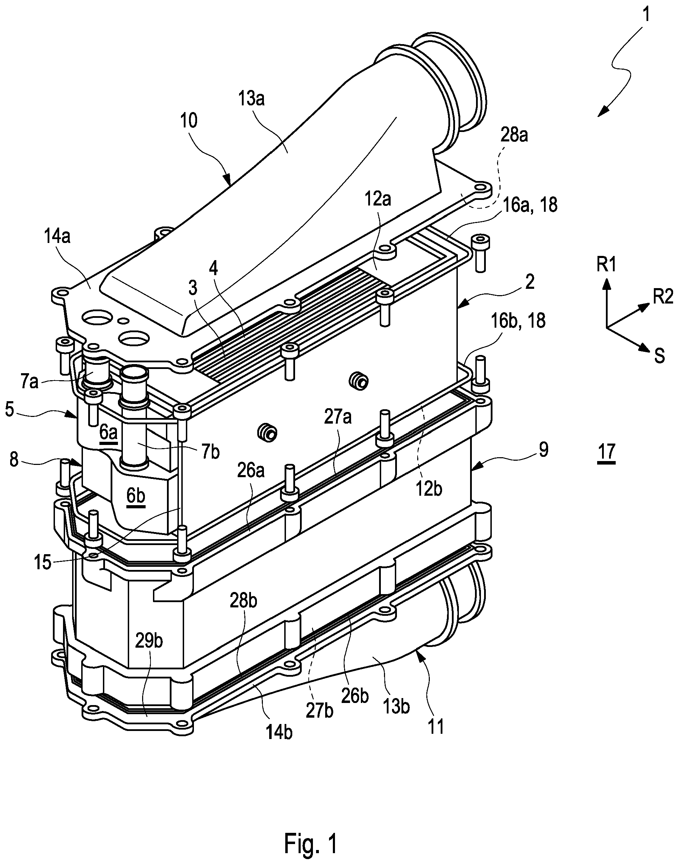

Figure 1 shows one example of a cooling device 1 according to the invention in an exploded illustration. The cooling device 1 comprises a heat exchanger which is configured as a tube-fin heat exchanger in the example of the figures. The heat exchanger 2 or tube-fin heat exchanger has a plurality of gas paths which extend along a first direction R1 and a plurality of coolant paths 4 which extend along a second direction R2. The two directions R1, R2 run orthogonally with respect to one another in the scenario of the example. The gas paths 3 and the coolant paths 4 can be stacked on one another along a stacking direction S which runs perpendicularly both with respect to the first direction R1 and with respect to the second direction R2. Heat is removed from the gas to be cooled and is fed to the coolant by way of a heat exchange between the gas and the coolant, as a result of which the desired cooling of the gas is achieved. The tube-fin heat exchanger is received in a housing 9.

In order to feed the coolant for cooling the gas to the individual coolant paths 4, a coolant distributor 5 is provided on the heat exchanger 2. The coolant distributor 5 comprises a first container 6a which is attached laterally to the heat exchanger 2 with regard to the stacking direction S and from which a first tubular body 7a which is fastened to the first container 6a projects upwards. The coolant can be introduced via the first tubular body 7a into the first container 6a and can be distributed from the latter to the individual coolant paths 4. To this end, the first container 6a communicates with the coolant paths 4 of the heat exchanger 2. The two containers 6a, 6b are expediently fastened to a side wall 15 of the heat exchanger 2.

In order to collect the coolant after it has flowed through the individual coolant paths 4 and to discharge it from the cooling device 1, a coolant collector 8 which likewise communicates with the coolant paths 4 is provided on the heat exchanger 2. The coolant collector 8 comprises a second container 6b which is attached to the heat exchanger 2 below the first container 6a and adjacently with respect to the latter. A second tubular body 7b which is fastened to the second container 6b projects upwards from the second container 6b. In the scenario of the example, the two tubular bodies 7a, 7b both extend in each case along the first direction R1. The two tubular bodies 7a, 7b therefore extend in parallel to one another. The second tubular body 7b can be brazed to the first container 6a at least in sections. Here, the two containers 6a, 6b are arranged and fastened above one another on the side wall 15 on the same side of the heat exchanger 2. In one variant of the example, the coolant distributor 5 and the coolant collector 8 can be swapped.

A gas distributor 10 and a gas collector 11 which both communicate fluidically with the gas paths 3 of the heat exchanger 2 in order to distribute and collect, respectively, the gas to be cooled are arranged on two sides 12a, 12b of the heat exchanger 2 which lie opposite one another along the first direction R1 and on which the housing 9 is of open configuration.

As Figure 1 shows clearly, the gas distributor 10 is configured as a casing hood 13a which is enclosed by an edge section 14a of plate-like configuration. In an analogous manner, the gas collector 11 is configured as a casing hood 13b which is enclosed by an edge section 14b of plate-like configuration. A first seal device 16a is arranged between the housing 2 and the gas distributor 11. A second seal device 16b is arranged between the housing 2 and the gas collector 12. The two seal devices 16a, 16b seal the gas paths 3 against the outer surroundings 17 of the heat exchanger 2. The first and the second seal device 16a, 16b are configured as identical parts.

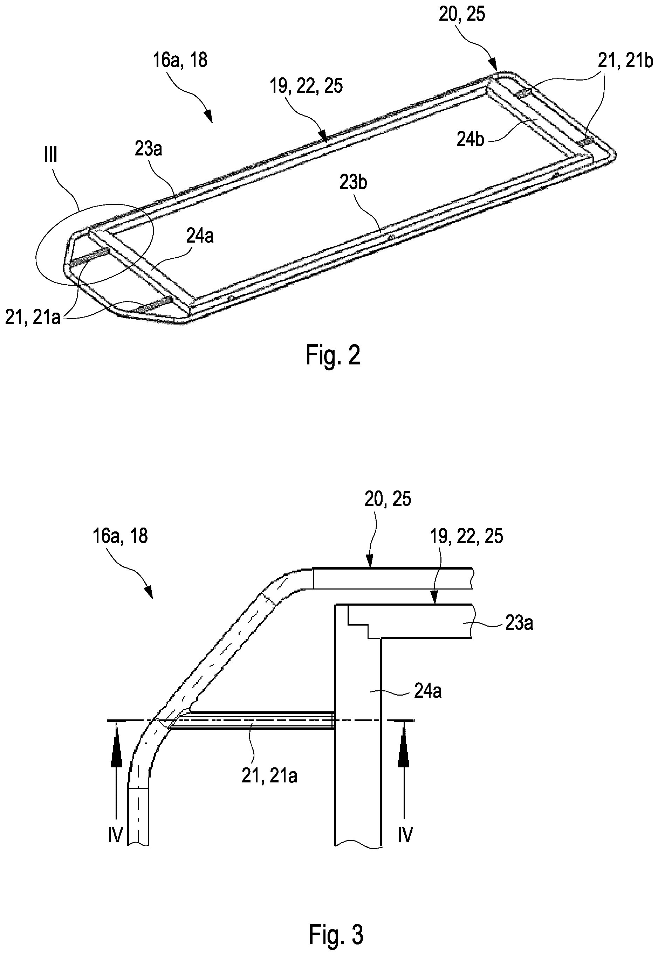

Figure 2 shows the first seal element 16a in a separate, perspective illustration. Since the two seal elements 16a, 16b are configured as identical parts, the following explanations with respect to the first seal element 16a also apply analogously to the second seal element 16b. In accordance with Figure 2, the first and the second seal device 16a, 16b are configured in each case as a frame part 18 with an inner frame 19 and an outer frame 20 which encloses the inner frame on the outside. Here, the outer frame 20 is arranged at a spacing from the inner frame 19.

In accordance with Figure 2, the inner frame 19 has the geometry of a rectangle 22 with two longitudinal sides 23a, 23b and two transverse sides 24a, 24b. The inner frame 19 is connected to the outer frame 20 via connecting struts 21. In the example of Figure 2, four connecting struts 21 are provided by way of example. Two first connecting struts 21a are arranged at a spacing from one another on a first transverse side 24a of the rectangle 22 and project outwards towards the outer frame 20 from the said transverse side 24a. Two second connecting struts 21b are arranged at a spacing from one another on a second transverse side 24b of the rectangle 22 and project outwards towards the outer frame 20 from the said transverse side 24b. The connecting struts 21a, 21b can be arranged in parallel to one another. The connecting struts 21a, 21b are manufactured from the elastic material of the outer frame 20 and are formed integrally on the outer frame,

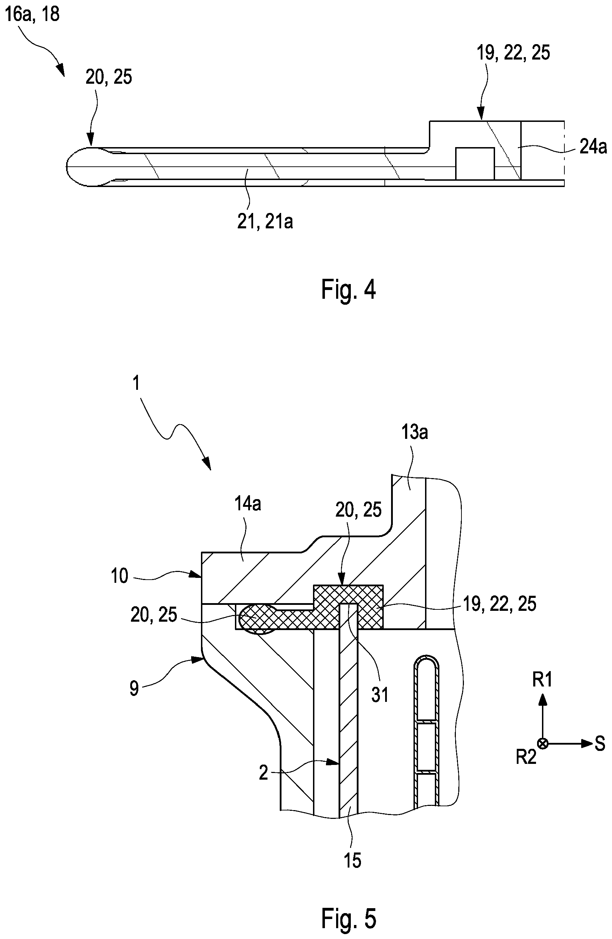

Figure 3 shows a detailed illustration III of Figure 2 in the region of a connecting strut 21. Figure 4 shows the frame part 18 in a longitudinal section along the sectional line IV-IV from Figure 3. Accordingly, the outer frame 20 is configured as a sealing lip 25 made from an elastic material, for example from an elastomer. The inner frame is also configured from the elastic material, in particular the elastomer, and is formed integrally on the outer frame 20. In one variant, the inner frame 19 can also be configured from a non-elastic plastic.

A renewed consideration of Figure 1 shows that the outer frame 20 of the first seal device 16a is arranged sealingly between a side 26a of the housing 9 which faces the gas distributor 10 and the gas distributor 10. The inner frame 19 of the first seal device 16a is arranged between that side 12a of the heat exchanger 2 which faces the gas distributor 10 and the gas distributor 10.

Accordingly, the outer frame 20 of the second seal device 16b is arranged sealingly between a side 26b of the housing 9 which faces the gas collector 11 and the gas collector 11. The inner frame 19 of the outer seal device 16b is arranged between the gas collector 11 and that side 12b of the heat exchanger 2 which faces the gas collector 11. A completely circumferential receiving groove 27a is configured on that side 26a of the housing 9 which faces the gas distributor 10, in which receiving groove 27a the outer frame 20 of the first seal device 16a, that is to say the sealing lip 25, is received partially. A completely circumferential receiving groove 28a is configured on a side 29a of the edge section 14a of the gas distributor 10 which faces the heat exchanger 2. The outer frame 20 of the first seal device 16a is received partially in the said receiving groove 28a.

A completely circumferential receiving groove 27b is configured on that second side 26b of the housing 9 which faces the gas collector 11, in which receiving groove 27b the outer frame 20 of the second seal device 16b is received partially. A completely circumferential receiving groove 28b is configured on a side 29b of the edge section 14b of the gas collector 11 which faces the heat exchanger 2. The outer frame 20, that is to say the sealing lip 25, of the second seal device 16b is received partially in the said receiving groove 28b.

Finally, attention is to be turned to the illustration of Figure 5 which shows the arrangement of the first seal element 16a between the heat exchanger 2 and the gas distributor 10 in a sectional illustration.

As Figure 5 further shows, the inner frame 19 of the first seal device 16a is clamped between the heat exchanger 2 and the edge section 14a of the gas distributor 10. As Figure 5 clearly shows, furthermore, a circumferential groove-like cut-out 31 can be provided on a side of the inner frame 19 which faces the heat exchanger 2, in which cut-out 31 the side wall 15 of the heat exchanger 2 is received. In this way, the inner frame 19 can be positioned precisely relative to the heat exchanger 2.

## Claims

1. Cooling device (1) for an internal combustion engine,
- having a heat exchanger (2), preferably a tube-fin heat exchanger, which is arranged in a housing (9) and has a plurality of gas paths (3) which extend along a first direction (R1) for being flowed through with a gas to be cooled and a plurality of coolant paths (4) which extend along a second direction (R2) for being flowed through with a coolant,
- a gas distributor (10) and a gas collector (11) which communicate fluidically with the gas paths (3) of the heat exchanger (2) in order to distribute and collect, respectively, the gas to be cooled, are attached on two sides (12a, 12b) of the heat exchanger (2) which lie opposite one another along the first direction (R1) and on which the housing (9) is of open configuration,
- a first seal device (16a) being arranged between the housing (9) and the gas distributor (10), and a second seal device (16b) being arranged between the housing (9) and the gas collector (11),
- the first and the second seal device (16a, 16b) being configured as identical parts,
- wherein the first and the second seal device (16a, 16b) are formed in each case as a frame part (18) with an inner frame (19) and with an outer frame (20) which encloses the inner frame (19) on the outside at a spacing,
**characterized in that**
- the inner frame (19) is connected to the outer frame (20) by means of at least one connecting strut (21).

2. Cooling device according to Claim 1,
**characterized in that**
at least the outer frame (20) is configured as a sealing lip (25) made from an elastic material.

3. Cooling device according to Claim 1 or 2,
**characterized in that**
the inner frame (19) is also configured from the elastic material and is formed integrally on the outer frame (20).

4. Cooling device according to one of the preceding Claims,
**characterized in that**
- the outer frame (20) of the first seal device (16a) is arranged sealingly between a side (26a) of the housing (9) which faces the gas distributor (10) and the gas distributor (10), and the inner frame (19) of the first seal device (16a) is arranged between that side (12a) of the heat exchanger (2) which faces the gas distributor (10) and the gas distributor (10), and/or **in that**
- the outer frame (20) of the second seal device (16b) is arranged sealingly between a side (26b) of the housing (9) which faces the gas collector (11) and the gas collector (11), and the inner frame (19) of the second seal device (16b) is arranged between that side (12b) of the heat exchanger (2) which faces the gas collector (11) and the gas collector (11).

5. Cooling device according to one of the preceding claims,
**characterized in that**
- the gas distributor (10) is configured as a casing hood (13a) which is enclosed by an edge section (14a) of plate-like configuration, a completely circumferential receiving groove (28a) being configured on a side (29a) of the edge section (14a) which faces the heat exchanger (2), in which receiving groove (28a) the outer frame (20) of the first seal device (16a) is received partially, and/or **in that**
- the gas collector (11) is configured as a casing hood (13b) which is enclosed by an edge section (14b) of plate-like configuration, a completely circumferential receiving groove (28b) being configured on a side (29b) of the edge section (14b) which faces the heat exchanger (2), in which receiving groove (28b) the outer frame (20) of the second seal device (16b) is received partially.

6. Cooling device according to one of the preceding claims,
**characterized in that**
- a completely circumferential receiving groove (27a) is configured on that side (26a) of the housing (9) which faces the gas distributor (10), in which receiving groove (27a) the outer frame (20) of the first seal device (16a) is received partially, and/or **in that**
- a completely circumferential receiving groove (27b) is configured on that side (26b) of the housing (9) which faces the gas collector (11), in which receiving groove (27b) the outer frame (20) of the second seal device (16b) is received partially.

7. Cooling device according to Claim 5 or 6,
**characterized in that**
- the inner frame (19) of the first seal device (16a) is clamped between the heat exchanger (2) and the edge section (14a) of the gas distributor (10), and/or **in that**
- the inner frame (19) of the second seal device (16b) is clamped between the heat exchanger (2) and the edge section (14b) of the gas collector (11).

8. Cooling device according to one of the preceding Claims,
**characterized in that**
the at least one connecting strut (21) is manufactured from the elastic material of the outer frame (20) and is formed integrally on the outer frame (20).

9. Cooling device according to one of the preceding Claims,
**characterized in that**
the inner frame (19) has the geometry of a rectangle (22) with two longitudinal sides (23a, 23b) and with two transverse sides (24a, 24b).

10. Cooling device according to Claim 9,
**characterized in that**
four connecting struts (21, 21a, 21b) are provided,
two first connecting struts (21a) being arranged at a spacing from one another on a first transverse side (24a) of the rectangle (22) and projecting outwards towards the outer frame (20) from the said transverse side (24a),
two second connecting struts (21b) being arranged at a spacing from one another on a second transverse side (24b) of the rectangle (22) and projecting outwards towards the outer frame (20) from the said transverse side (24b).

11. Internal combustion engine having an exhaust gas system and having a cooling device (1) according to one of the preceding claims.

## Patentansprüche

1. Kühlvorrichtung (1) für eine Brennkraftmaschine,
- aufweisend einen Wärmeübertrager (2), vorzugsweise einen Rohrrippen-Wärmeübertrager, der in einem Gehäuse (9) angeordnet ist und eine Vielzahl von Gaspfaden (3), die sich entlang einer ersten Richtung (R1) zum Durchströmen mit einem zu kühlenden Gas erstrecken, und eine Vielzahl von Kühlmittelpfaden (4), die sich entlang einer zweiten Richtung (R2) zum Durchströmen mit einem Kühlmittel erstrecken, aufweist,
- wobei ein Gasverteiler (10) und ein Gassammler (11), die fluidisch mit den Gaspfaden (3) des Wärmeübertragers (2) in Verbindung stehen, um das zu kühlende Gas zu verteilen bzw. zu sammeln, auf zwei Seiten (12a, 12b) des Wärmeübertragers (2) angebracht sind, die entlang der ersten Richtung (R1) einander gegenüberliegen und auf denen das Gehäuse (9) von offener Konfiguration ist,
- eine erste Dichtungseinrichtung (16a), die zwischen dem Gehäuse (9) und dem Gasverteiler (10) angeordnet ist, und eine zweite Dichtungseinrichtung (16b), die zwischen dem Gehäuse (9) und dem Gassammler (11) angeordnet ist,
- die erste und die zweite Dichtungseinrichtung (16a, 16b) als identische Teile konfiguriert sind,
- wobei die erste und die zweite Dichtungseinrichtung (16a, 16b) jeweils als ein Rahmenteil (18) mit einem Innenrahmen (19) und mit einem Außenrahmen (20), der den Innenrahmen (19) auf der Außenseite in einem Abstand umschließt, gebildet sind,
**dadurch gekennzeichnet, dass**
- der Innenrahmen (19) mit dem Außenrahmen (20) mittels mindestens einer Verbindungsstrebe (21) verbunden ist.

2. Kühlvorrichtung nach Anspruch 1,
**dadurch gekennzeichnet, dass**
mindestens der Außenrahmen (20) als eine Dichtlippe (25) konfiguriert ist, die aus einem elastischen Material hergestellt ist.

3. Kühlvorrichtung nach Anspruch 1 oder 2,
**dadurch gekennzeichnet, dass**
auch der Innenrahmen (19) aus dem elastischen Material konfiguriert ist und integral am Außenrahmen (20) gebildet ist.

4. Kühlvorrichtung nach einem der vorstehenden Ansprüche,
**dadurch gekennzeichnet, dass**
- der Außenrahmen (20) der ersten Dichtungseinrichtung (16a) zwischen einer Seite (26a) des Gehäuses (9), die dem Gasverteiler (10) zugewandt ist, und dem Gasverteiler (10) dichtend angeordnet ist und der Innenrahmen (19) der ersten Dichtungseinrichtung (16a) zwischen der Seite (12a) des Wärmeübertragers (2), die dem Gasverteiler (10) zugewandt ist, und dem Gasverteiler (10) angeordnet ist, und/oder dadurch, dass
- der Außenrahmen (20) der zweiten Dichtungseinrichtung (16b) zwischen einer Seite (26b) des Gehäuses (9), die dem Gassammler (11) zugewandt ist, und dem Gassammler (11) dichtend angeordnet ist und der Innenrahmen (19) der zweiten Dichtungseinrichtung (16b) zwischen der Seite (12b) des Wärmeübertragers (2), die dem Gassammler (11) zugewandt ist, und dem Gassammler (11) angeordnet ist.

5. Kühlvorrichtung nach einem der vorstehenden Ansprüche,
**dadurch gekennzeichnet, dass**
- der Gasverteiler (10) als eine Gehäusehaube (13a) konfiguriert ist, die durch einen Randabschnitt (14a) von plattenartiger Konfiguration umschlossen ist, wobei eine vollständig umlaufende Aufnahmenut (28a) auf einer Seite (29a) des Randabschnitts (14a), die dem Wärmeübertrager (2) zugewandt ist, konfiguriert ist, in welcher Aufnahmenut (28a) der Außenrahmen (20) der ersten Dichtungseinrichtung (16a) teilweise aufgenommen ist, und/oder dadurch, dass
- der Gassammler (11) als eine Gehäusehaube (13b) konfiguriert ist, die durch einen Randabschnitt (14b) von plattenartiger Konfiguration umschlossen ist, wobei eine vollständig umlaufende Aufnahmenut (28b) auf einer Seite (29b) des Randabschnitts (14b), die dem Wärmeübertrager (2) zugewandt ist, konfiguriert ist, in welcher Aufnahmenut (28b) der Außenrahmen (20) der zweiten Dichtungseinrichtung (16b) teilweise aufgenommen ist.

6. Kühlvorrichtung nach einem der vorstehenden Ansprüche,
**dadurch gekennzeichnet, dass**
- eine vollständig umlaufende Aufnahmenut (27a) auf der Seite (26a) des Gehäuses (9), die dem Gasverteiler (10) zugewandt ist, konfiguriert ist, in welcher Aufnahmenut (27a) der Außenrahmen (20) der ersten Dichtungseinrichtung (16a) teilweise aufgenommen ist, und/oder dadurch, dass
- eine vollständig umlaufende Aufnahmenut (27b) auf der Seite (26b) des Gehäuses (9), die dem Gassammler (11) zugewandt ist, konfiguriert ist, in welcher Aufnahmenut (27b) der Außenrahmen (20) der zweiten Dichtungseinrichtung (16b) teilweise aufgenommen ist.

7. Kühlvorrichtung nach Anspruch 5 oder 6,
**dadurch gekennzeichnet, dass**
- der Innenrahmen (19) der ersten Dichtungseinrichtung (16a) zwischen dem Wärmeübertrager (2) und dem Randabschnitt (14a) des Gasverteilers (10) eingespannt ist, und/oder dadurch, dass
- der Innenrahmen (19) der zweiten Dichtungseinrichtung (16b) zwischen dem Wärmeübertrager (2) und dem Randabschnitt (14b) des Gassammlers (11) eingespannt ist.

8. Kühlvorrichtung nach einem der vorstehenden Ansprüche,
**dadurch gekennzeichnet, dass**
die mindestens eine Verbindungsstrebe (21) aus dem elastischen Material des Außenrahmens (20) hergestellt ist und integral am Außenrahmen (20) gebildet ist.

9. Kühlvorrichtung nach einem der vorstehenden Ansprüche,
**dadurch gekennzeichnet, dass**
der Innenrahmen (19) die Geometrie eines Rechtecks (22) mit zwei Längsseiten (23a, 23b) und mit zwei Querseiten (24a, 24b) aufweist.

10. Kühlvorrichtung nach Anspruch 9,
**dadurch gekennzeichnet, dass**
vier Verbindungsstreben (21, 21a, 21b) bereitgestellt sind,
wobei zwei erste Verbindungsstreben (21a) auf einer ersten Querseite (24a) des Rechtecks (22) in einem Abstand voneinander angeordnet sind und von der Querseite (24a) auswärts hin zum Außenrahmen (20) abstehen,
wobei zwei zweite Verbindungsstreben (21b) auf einer zweiten Querseite (24b) des Rechtecks (22) in einem Abstand voneinander angeordnet sind und von der Querseite (24b) auswärts hin zum Außenrahmen (20) abstehen.

11. Brennkraftmaschine, die ein Abgassystem aufweist und eine Kühlvorrichtung (1) nach einem der vorstehenden Ansprüche aufweist.

## Revendications

1. Dispositif de refroidissement (1) pour un moteur à combustion interne,
- présentant un échangeur de chaleur (2), de préférence un échangeur de chaleur à ailette-tube, qui est agencé dans un logement (9) et présente une pluralité de trajets de gaz (3) qui s'étendent le long d'une première direction (R1) pour l'écoulement au travers d'un gaz à refroidir et une pluralité de trajets de réfrigérant (4) qui s'étendent le long d'une seconde direction (R2) pour l'écoulement au travers d'un réfrigérant,
- un distributeur de gaz (10) et un collecteur de gaz (11) qui communiquent fluidiquement avec les trajets de gaz (3) de l'échangeur de chaleur (2) afin de distribuer et collecter, respectivement, le gaz à refroidir, sont attachés sur deux côtés (12a, 12b) de l'échangeur de chaleur (2) qui se trouvent à l'opposé l'un de l'autre le long de la première direction (R1) et sur lesquels le logement (9) est dans une configuration ouverte,
- un premier dispositif étanche (16a) étant agencé entre le logement (9) et le distributeur de gaz (10), et un second dispositif étanche (16b) étant agencé entre le logement (9) et le collecteur de gaz (11),
- le premier et le second dispositif étanche (16a, 16b) étant configurés comme des parties identiques,
- dans lequel le premier et le second dispositif étanche (16a, 16b) sont formés dans chaque cas comme une partie de cadre (18) avec un cadre intérieur (19) et avec un cadre extérieur (20) qui enferme le cadre intérieur (19) sur le côté extérieur à une distance,
**caractérisé en ce que**
- le cadre intérieur (19) est raccordé au cadre extérieur (20) au moyen d'au moins une entretoise de raccordement (21).

2. Dispositif de refroidissement selon la revendication 1,
**caractérisé en ce que**
au moins le cadre extérieur (20) est configuré comme une lèvre d'étanchéité (25) réalisée en un matériau élastique.

3. Dispositif de refroidissement selon la revendication 1 ou 2,
**caractérisé en ce que**
le cadre intérieur (19) est aussi configuré à partir du matériau élastique et est formé d'un seul tenant sur le cadre extérieur (20).

4. Dispositif de refroidissement selon l'une des revendications précédentes,
**caractérisé en ce que**
- le cadre extérieur (20) du premier dispositif étanche (16a) est agencé de manière étanche entre un côté (26a) du logement (9) qui est tourné vers le distributeur de gaz (10) et le distributeur de gaz (10), et le cadre intérieur (19) du premier dispositif étanche (16a) est agencé entre ce côté (12a) de l'échangeur de chaleur (2) qui est tourné vers le distributeur de gaz (10) et le distributeur de gaz (10), et/ou **en ce que**
- le cadre extérieur (20) du second dispositif étanche (16b) est agencé de manière étanche entre un côté (26b) du logement (9) qui est tourné vers le collecteur de gaz (11) et le collecteur de gaz (11), et le cadre intérieur (19) du second dispositif étanche (16b) est agencé entre ce côté (12b) de l'échangeur de chaleur (2) qui est tourné vers le collecteur de gaz (11) et le collecteur de gaz (11).

5. Dispositif de refroidissement selon l'une des revendications précédentes,
**caractérisé en ce que**
- le distributeur de gaz (10) est configuré comme un capot de carter (13a) qui est enfermé par une section d'arête (14a) de configuration de type plaque, une rainure de réception complètement circonférentielle (28a) étant configurée sur un côté (29a) de la section d'arête (14a) qui est tourné vers l'échangeur de chaleur (2), dans laquelle rainure de réception (28a) le cadre extérieur (20) du premier dispositif étanche (16a) est reçu partiellement, et/ou **en ce que**
- le collecteur de gaz (11) est configuré comme un capot de carter (13b) qui est enfermé par une section d'arête (14b) de la configuration de type plaque, une rainure de réception complètement circonférentielle (28b) étant configurée sur un côté (29b) de la section d'arête (14b) qui est tournée vers l'échangeur de chaleur (2), dans laquelle rainure de réception (28b) le cadre extérieur (20) du second dispositif étanche (16b) est reçu partiellement.

6. Dispositif de refroidissement selon l'une des revendications précédentes,
**caractérisé en ce que**
- une rainure de réception complètement circonférentielle (27a) est configurée sur ce côté (26a) du logement (9) qui est tourné vers le distributeur de gaz (10), dans laquelle rainure de réception (27a) le cadre extérieur (20) du premier dispositif étanche (16a) est reçu partiellement, et/ou **en ce que**
- une rainure de réception complètement circonférentielle (27b) est configurée sur ce côté (26b) du logement (9) qui est tourné vers le collecteur de gaz (11), dans laquelle rainure de réception (27b) le cadre extérieur (20) du second dispositif étanche (16b) est reçu partiellement.

7. Dispositif de refroidissement selon la revendication 5 ou 6,
**caractérisé en ce que**
- le cadre intérieur (19) du premier dispositif étanche (16a) est serré entre l'échangeur de chaleur (2) et la section d'arête (14a) du distributeur de gaz (10), et/ou **en ce que**
- le cadre intérieur (19) du second dispositif étanche (16b) est serré entre l'échangeur de chaleur (2) et la section d'arrêt (14b) du collecteur de gaz (11).

8. Dispositif de refroidissement selon l'une des revendications précédentes,
**caractérisé en ce que**
l'au moins une entretoise de raccordement (21) est fabriquée à partir du matériau élastique du cadre extérieur (20) et est formée d'un seul tenant sur le cadre extérieur (20).

9. Dispositif de refroidissement selon l'une des revendications précédentes,
**caractérisé en ce que**
le cadre intérieur (19) présente la géométrie d'un rectangle (22) avec deux côtés longitudinaux (23a, 23b) et avec deux côtés transversaux (24a, 24b).

10. Dispositif de refroidissement selon la revendication 9,
**caractérisé en ce que**
quatre entretoises de raccordement (21, 21a, 21b) sont prévues,
deux premières entretoises de raccordement (21a) étant agencées à une distance l'une de l'autre sur un premier côté transversal (24a) du rectangle (22) et faisant saillie vers l'extérieur vers le cadre extérieur (20) depuis ledit côté transversal (24a),
deux secondes entretoises de raccordement (21b) étant agencées à une distance l'une de l'autre sur un second côté transversal (24b) du rectangle (22) et faisant saillie vers l'extérieur vers le cadre extérieur (20) depuis ledit côté transversal (24b).

11. Moteur à combustion interne présentant un système de gaz d'échappement et présentant un dispositif de refroidissement (1) selon l'une des revendications précédentes.
